# FASCICULE DE BREVET EUROPEEN

(11) **EP 0 927 663 B1**
(45) Date de publication et mention de la délivrance du brevet: **18.09.2002**
(21) Numéro de dépôt: 98403107.0
(22) Date de dépôt: 09.12.1998
(51) Int. Cl.: B60R 5/04

(54) **Dispositif de cloisonnement modulaire de coffre de véhicule**
Modularer Raumteiler für den Kofferraum eines Fahrzeuges
Modular partition in vehicle luggage compartment

(30) Priorité: 29.12.1997 FR 9716633
(43) Date de publication de la demande: 07.07.1999
(73) Titulaire: AUTOMOBILES PEUGEOT, 75116 Paris (FR); AUTOMOBILES CITROEN, 92200 Neuilly-sur-Seine (FR)
(72) Inventeur: Bertrand Belanger, Pascal, 75009 Paris (FR)
(74) Mandataire: Bentz, Jean-Paul

(56) Documents cités:
- EP-A- 0 283 363
- DE-A- 3 332 695
- DE-C- 4 438 910
- DE-U- 1 688 723
- FR-A- 2 353 417
- PATENT ABSTRACTS OF JAPAN vol. 010, no. 246 (M-510), 23 août 1986 & JP 61 075036 A (NISSAN MOTOR CO LTD), 17 avril 1986
- PATENT ABSTRACTS OF JAPAN vol. 010, no. 115 (M-474), 30 avril 1986 & JP 60 244646 A (NISSAN JIDOSHA KK), 4 décembre 1985

## Description

L'invention est relative à un dispositif de cloisonnement modulaire de coffre de véhicule, notamment destiné à des véhicules découverts.

On connaît déjà des véhicules dont le coffre arrière est modulaire et peut définir des volumes de rangement différents. Cependant, les possibilités de cloisonnement sont limitées et les manoeuvres permettant de passer d'un espace de rangement à un autre sont longues et compliquées.

Le brevet JP 61075036 A révèle par exemple un dispositif de cloisonnement selon le préambule de la revendication 1, dans lequel un panneau de plancher peut prendre deux positions horizontales, une position haute et une position basse.

Dans la position haute, un bord du panneau repose sur un rebord ménagé dans un panneau arrière du coffre, et sur un dispositif de verrouillage mécanique amovible, engagé dans un trou du panneau arrière.

Dans la position basse, le panneau de plancher repose sur ce même dispositif de verrouillage, engagé dans un autre trou du panneau arrière, et sur une traverse formée dans le fond du coffre arrière.

L'invention a pour but de pallier ces inconvénients en proposant un dispositif de cloisonnement modulaire de coffre de véhicule de conception et d'utilisation particulièrement simples. Ce dispositif permet d'adopter une multiplicité de configurations s'adaptant aux besoins de l'utilisateur et aux charges à transporter. Ces configurations sont obtenues rapidement, à la manière d'un jeu de construction.

L'invention concerne donc un dispositif de cloisonnement modulaire de la partie arrière d'un véhicule formant coffre selon la revendication 1.

De préférence, les moyens de retenue comprennent des premières nervures sensiblement parallèles au plancher du véhicule et situées à au moins deux hauteurs différentes par rapport audit plancher, ces nervures définissant au moins une position horizontale haute et une position horizontale basse du panneau de plancher.

De façon préférée, les moyens de retenue comprennent également des deuxièmes nervures sensiblement orthogonales au plancher du véhicule, ces nervures définissant au moins une position verticale du panneau de plancher.

Dans un mode particulier de réalisation de l'invention, les moyens de retenue comprennent en outre des troisièmes nervures inclinées par rapport au plancher du véhicule, vers l'arrière du véhicule, pour définir une position relevée du panneau.

De préférence, le dispositif de cloisonnement selon l'invention comprend d'autres nervures prévues tant sur le dossier de la banquette arrière du véhicule que sur un hayon susceptible d'être monté à l'extrémité arrière du véhicule, lesquelles autres nervures coopèrent avec le panneau de plancher dans les deux positions horizontales haute et basse précitées.

De façon préférée, le dispositif de cloisonnement comprend en outre d'autres nervures sur les parois latérales internes du véhicule qui peuvent coopérer avec le dossier et qui définissent respectivement une position verticale du dossier par rapport au plancher du véhicule, une position inclinée dudit dossier vers l'arrière du véhicule et une position du dossier rabattue sur l'assise de la banquette.

Les nervures précitées peuvent être rapportées sur les parois latérales internes du véhicule, mais elles sont, de préférence, obtenues lors du moulage de ces parois.

Enfin, les nervures précitées du dossier de la banquette arrière et du hayon forment des creux tournés vers l'intérieur du véhicule.

L'invention sera mieux comprise, et d'autres buts, avantages et caractéristiques de celle-ci apparaîtront plus clairement à la lecture de la description qui suit d'exemples non limitatifs de réalisation de l'invention en référence aux dessins annexés sur lesquels :

La figure 1 est une vue schématique en perspective d'un véhicule montrant, de façon séparée, les éléments constitutifs du dispositif de cloisonnement selon l'invention.

La figure 2 est une vue partielle en coupe longitudinale d'un véhicule, montrant les éléments constitutifs du dispositif de cloisonnement selon l'invention.

La figure 3 est une vue partielle en coupe longitudinale d'un véhicule équipé d'un dispositif de cloisonnement selon l'invention, mis en place selon une première configuration, avec un coffre inférieur fermé.

La figure 4 est une vue similaire à la figure 3, avec le coffre inférieur ouvert.

La figure 5 est une vue partielle en coupe longitudinale d'un véhicule équipé d'un dispositif de cloisonnement selon l'invention, mis en place selon une deuxième configuration, avec un coffre supérieur fermé.

La figure 6 est une vue partielle en coupe longitudinale d'un véhicule équipé d'un dispositif de cloisonnement selon l'invention, placé selon une troisième configuration définissant un coffre inférieur et un plancher arrière plat.

La figure 7 est une vue partielle en coupe longitudinale d'un véhicule équipé d'un dispositif de cloisonnement selon l'invention, mis en place selon une quatrième configuration, définissant un plancher plat et un système d'arrêt de charge.

Les éléments communs aux différentes figures seront désignés par les mêmes repères.

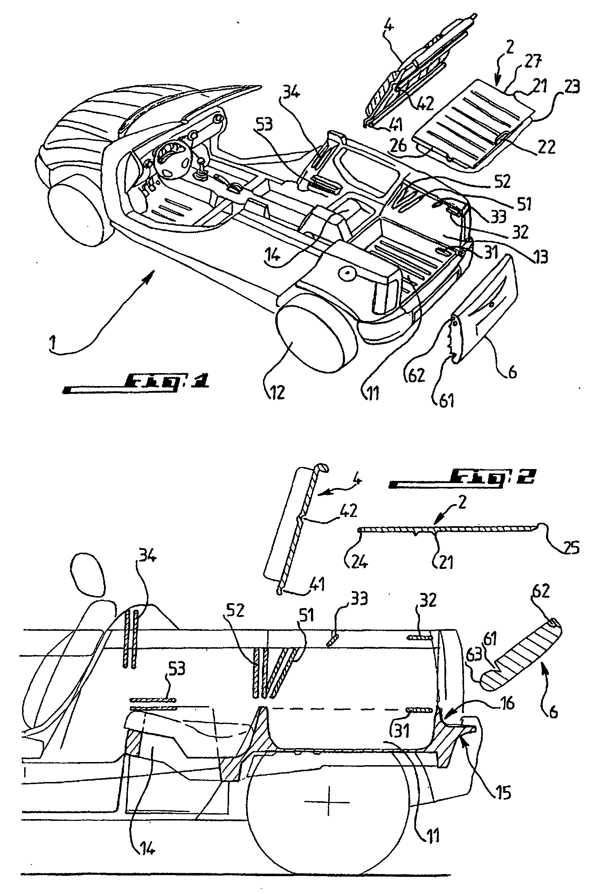

Le véhicule représenté à la figure 1 est un véhicule découvert, mais le dispositif de cloisonnement selon l'invention peut être également utilisé avec un véhicule fermé.

On s'intéressera essentiellement à la partie arrière du véhicule, dans laquelle le dispositif de cloisonnement est mis en place.

Ce dispositif comprend un panneau de plancher 2 dont les dimensions correspondent sensiblement à celles du plancher arrière 11 du véhicule, situé entre les deux roues 12.

De préférence, ce panneau de plancher comporte, sur ses bords 26, 27, des ergots 21 et, sur le côté arrière 25, un moyen de préhension 22 qui facilite la manipulation du panneau.

Sur la périphérie du panneau de plancher, est de préférence prévu un joint torique 23.

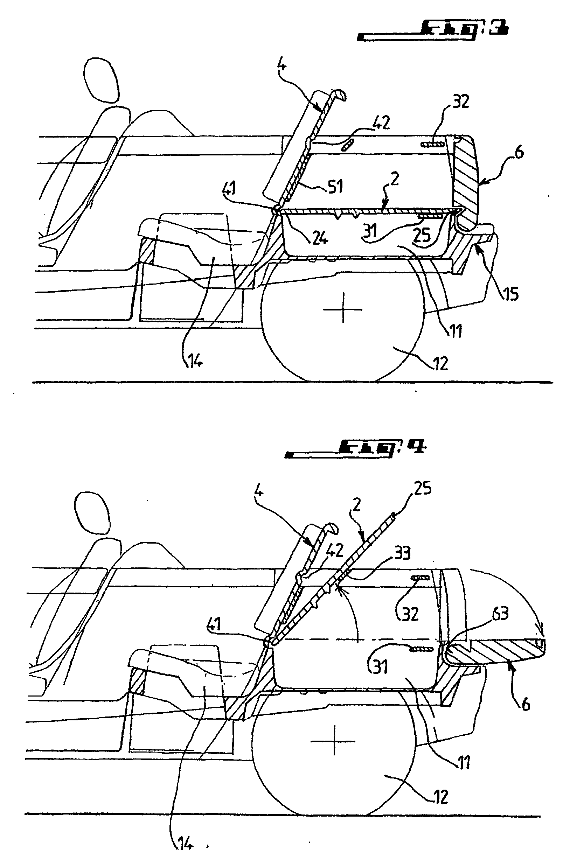

Le panneau de plancher 2 peut être fixé sur le véhicule 1 dans différentes positions qui seront examinées plus en détail au regard des figures 2 à 6.

Les moyens de retenue du panneau de plancher 2 sur le véhicule 1 sont portés par les parois latérales internes 13 du véhicule.

Dans le mode de réalisation illustré sur les figures, ces moyens de retenue sont des nervures qui sont, de préférence, obtenues lors du moulage des parois latérales du véhicule. Elles peuvent également être rapportées sur les parois latérales.

Ces nervures sont définies par paires. A une nervure située sur une paroi latérale interne correspond une autre nervure située sur la paroi latérale interne opposée, les deux nervures étant sensiblement en vis-à-vis.

Comme le montre également plus en détail la figure 2, les moyens de retenue comportent deux paires de nervures 31 et 32 qui sont sensiblement parallèles au plancher 11 du véhicule. Les nervures 31 définissent une position horizontale basse pour le panneau de plancher 2, tandis que les nervures 32 définissent une position horizontale haute.

Dans l'exemple illustré sur les figures, les moyens de retenue comprennent également une paire de nervures 33 inclinées par rapport au plancher 11, vers l'arrière du véhicule. De préférence, l'angle que forment ces nervures avec le plancher 11 est d'environ 60 degrés.

Comme le montrent les figures 1 et 2, les moyens de retenue comprennent aussi une paire de nervures 34 sensiblement orthogonales au plancher 11 du véhicule.

Le repère 14 désigne l'assise de la banquette arrière du véhicule 1.

De préférence, le dispositif de cloisonnement selon l'invention comporte également le dossier 4 de la banquette arrière qui est indépendant de l'assise 14, et donc non articulé par rapport à elle.

Le dispositif de cloisonnement comporte alors des moyens de retenue du dossier 4 sur le véhicule, portés par les parois latérales internes 13 du véhicule.

Dans le mode de réalisation illustré par les figures, ces moyens de retenue sont des nervures 51, 52, 53 qui sont également définies par paires, comme les nervures 31 à 34.

Les nervures 51 sont inclinées par rapport au plancher 11, vers l'arrière du véhicule. De préférence, l'angle formé par les nervures 51 avec le plancher 11 est d'environ 65 degrés. Ces nervures 51 définissent une position inclinée vers l'arrière du dossier 4 de la banquette arrière.

Les nervures 52 sont sensiblement perpendiculaires au plancher 11 du véhicule et définissent une position verticale du dossier 4.

Le dispositif de cloisonnement comprend également des nervures 53 sensiblement parallèles au plancher 11 et situées à proximité de l'assise 14 de la banquette arrière. Ces nervures 53 permettent de placer le dossier 4 de la banquette en position rabattue sur l'assise 14.

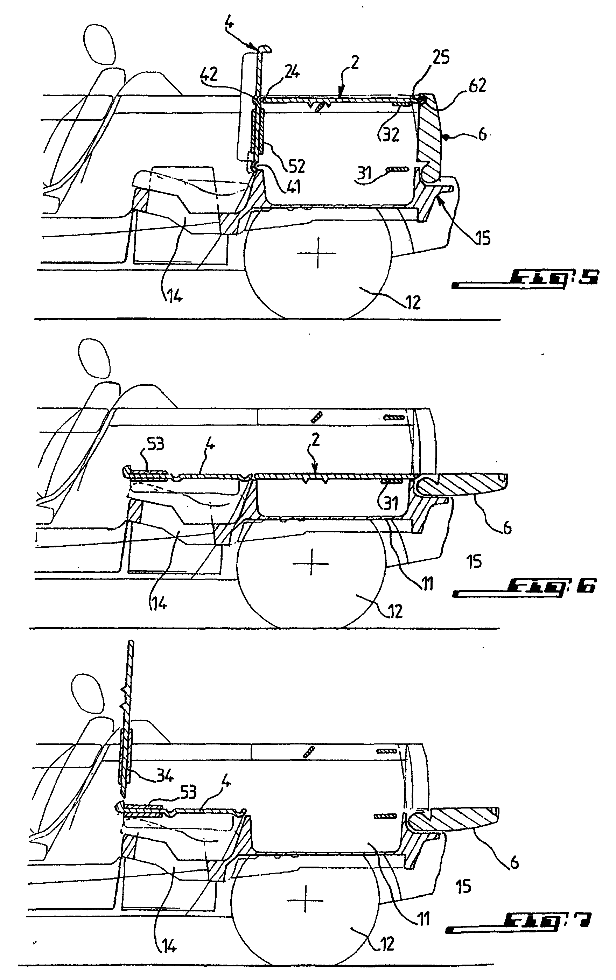

Par ailleurs, sur la face arrière du dossier 4 sont ménagées des nervures 41 et 42, qui, de préférence, forment des creux tournés vers l'intérieur du véhicule, c'est-à-dire vers l'espace formant coffre. Comme on le verra plus en détail en référence aux figures 3 et 5, la nervure 41 est située au niveau des nervures 31 et la nervure 42 au niveau des nervures 32.

Le dispositif de cloisonnement comporte également de préférence un hayon 6, susceptible d'être monté à l'extrémité arrière 15 du véhicule.

Sur sa face interne, le hayon 6 comporte des nervures longitudinales 61 et 62 qui, de préférence, forment des creux tournés vers l'intérieur du véhicule. Comme le montrent plus précisément les figures 3 et 5, lorsque le hayon 6 est en position fermée, sensiblement perpendiculaire au plancher 11, la nervure 61 est au niveau des nervures 31 et de la nervure 41 du dossier, tandis que la nervure 62 est au niveau des nervures 32 et de la nervure 42 du dossier 4.

Le hayon 6 comporte, du côté de la nervure 61, un bord longitudinal arrondi 63 qui est destiné à coopérer avec une partie concave 16 de l'extrémité arrière du véhicule 1.

Les différentes configurations du dispositif de cloisonnement selon l'invention vont maintenant être décrites plus en détail en référence aux figures 3 à 7.

La figure 3 illustre une première configuration du dispositif de cloisonnement qui définit une banquette arrière, un coffre inférieur fermé et un coffre supérieur ouvert.

Pour obtenir cette configuration, on commence par mettre en place le dossier 4 de la banquette arrière entre les parois latérales internes 13, de façon à l'emboîter dans les nervures 51 qui le retiennent dans sa position inclinée vers l'arrière du véhicule.

On met ensuite en place le panneau de plancher 2 entre les parois 13, ses bords 26 et 27 coopérant avec les nervures 31 et le côté avant 24 du panneau de plancher 2 venant s'insérer dans la nervure 41 du dossier 4.

On place le hayon 6 en position fermée, c'est-à-dire perpendiculaire au plancher 11.

Dans cette configuration, le dispositif de cloisonnement définit un coffre inférieur fermé et étanche, grâce à la présence du joint torique 23. Par ailleurs, le hayon 6 peut être verrouillable, de façon à protéger l'accès au coffre inférieur.

Cette configuration définit également un coffre supérieur qui est ouvert et libre d'accès.

La figure 4 illustre également la première configuration, le coffre inférieur étant ouvert pour permettre notamment son chargement.

Le hayon 6 est déverrouillé et placé en position ouverte, sensiblement parallèle au plancher 11 du véhicule, en le faisant pivoter autour de son bord arrondi 63. Le côté arrière 25 du panneau de plancher 2 est alors libéré et le panneau peut être soulevé, en le faisant pivoter dans la nervure 41 du dossier 4.

Le panneau de plancher 2 peut être maintenu en position ouverte, grâce aux nervures inclinées 33 et aux ergots 21 portés par ses bords 26 et 27.

La figure 5 illustre une deuxième configuration du dispositif de cloisonnement selon l'invention qui permet de ménager un coffre fermé de taille importante, tout en conservant la banquette arrière du véhicule.

Dans cette configuration, le dossier 4 de la banquette arrière est maintenu en position verticale par les nervures 52 solidaires des parois latérales internes 13 du véhicule.

On place ensuite le panneau de plancher 2 en position haute, sur les nervures 32.

Le côté avant 24 du panneau 2 est inséré dans la nervure 42 du dossier 4 de la banquette arrière.

Le hayon 6 est alors placé à l'extrémité arrière 15 du véhicule. Le hayon est mobile entre une position ouverte et parallèle au plancher 11 (non représentée sur la figure 5) et une position fermée dans laquelle le hayon est perpendiculaire au plancher 11.

Lorsque le hayon est en position ouverte, le panneau de plancher peut également être soulevé en le faisant pivoter dans la nervure 42 du dossier 4, ce qui facilite le chargement du coffre.

Lorsque le hayon 6 est en position fermée, le côté arrière 25 du panneau de plancher 2 est inséré dans la nervure 62 du hayon. Ainsi, le dossier 4, le panneau de plancher 2 et le hayon 6 sont solidaires du véhicule. Le coffre est fermé et étanche. Son contenu est totalement protégé, lorsque le hayon 6 est verrouillé.

La figure 6 illustre une troisième configuration du dispositif de cloisonnement selon l'invention.

Le dossier 4 de la banquette arrière est emboîté dans les nervures 53 des parois latérales 13 et il est donc en position rabattue sur l'assise 14. Le panneau de plancher 2 est retenu en position basse par les nervures 31. Le hayon 6 est placé en position ouverte, il est donc parallèle au plancher 11 du véhicule.

Cette configuration ménage un plancher qui permet de disposer d'une longueur maximale à l'arrière du véhicule et d'un coffre de rangement inférieur qui est étanche.

La figure 7 illustre une quatrième configuration du dispositif de cloisonnement selon l'invention. Le dossier 4 de la banquette arrière est maintenu par les nervures 53, en position rabattue sur l'assise 14 de la banquette arrière.

Le panneau de plancher 2 est ensuite emboîté dans les nervures verticales 34 portées par les parois latérales 13 du véhicule.

Le hayon 6 peut être placé en position ouverte ou en position fermée (non illustrée sur la figure 7).

Cette quatrième configuration permet également d'utiliser la longueur maximale de plancher à l'arrière du véhicule. Par ailleurs, le panneau de plancher 2 sert d'arrêt de charge vis-à-vis des sièges avant du véhicule.

La description qui précède montre que le dispositif de cloisonnement selon l'invention peut être facilement mis en place sur un véhicule. L'utilisateur doit simplement placer les éléments constitutifs du dispositif dans un ordre approprié.

Par ailleurs, le dispositif de cloisonnement ne nécessite aucune pièce de quincaillerie, du type vis, charnière ou tirant, ce qui simplifie sa fabrication et sa mise en place.

De préférence, le panneau de plancher 2, le dossier arrière 4 et le hayon 6 sont réalisés en matériau composite. Ils peuvent donc être facilement moulés avec des formes variées.

Enfin, les repères insérés après les caractéristiques techniques figurant dans les revendications ont pour seul but d'améliorer la compréhension de ces dernières et ne sauraient en limiter la portée.

## Revendications

1. Dispositif de cloisonnement modulaire de la partie arrière d'un véhicule formant coffre, au moyen d'un panneau de plancher (2) amovible susceptible de prendre des positions variables dans la partie arrière du véhicule, coopérant par ses bords (26, 27) avec des moyens de retenue (31, 32, 33, 34) solidaires des parois latérales internes (13) de la partie arrière du véhicule, **caractérisé en ce que** les moyens de retenues (31, 32, 33, 34) comprennent plusieurs nervures portées par les parois latérales internes (13), pour plusieurs positions variables.

2. Dispositif selon la revendication 1, **caractérisé en ce que** les moyens de retenue comprennent des premières nervures (31, 32) sensiblement parallèles au plancher (11) du véhicule et situées à au moins deux hauteurs différentes par rapport audit plancher, ces nervures (31, 32) définissant au moins une position horizontale haute et une position horizontale basse du panneau de plancher (2).

3. Dispositif selon la revendication 1 ou 2, **caractérisé en ce que** les moyens de retenue comprennent également des deuxièmes nervures (34) sensiblement orthogonales au plancher (11) du véhicule, ces nervures (34) définissant au moins une position verticale du panneau de plancher (2).

4. Dispositif selon l'une des revendications 1 à 3, **caractérisé en ce que** les moyens de retenue comprennent en outre des troisièmes nervures (33) inclinées par rapport au plancher (11) du véhicule, vers l'arrière du véhicule, pour définir une position relevée du panneau.

5. Dispositif selon l'une des revendications 2 à 4, **caractérisé en ce qu'**il comprend d'autres nervures (41, 42 ; 61, 62) prévues tant sur le dossier (4) de la banquette arrière du véhicule que sur un hayon (6) susceptible d'être monté à l'extrémité arrière (15) du véhicule, lesquelles autres nervures coopèrent avec le panneau de plancher (2) dans les deux positions horizontales haute et basse précitées.

6. Dispositif selon la revendication 5, **caractérisé en ce qu'**il comprend en outre d'autres nervures (51, 52, 53) sur les parois latérales internes (13) du véhicule qui peuvent coopérer avec le dossier (4) et qui définissent respectivement une position inclinée du dossier (4) vers l'arrière du véhicule, une position verticale dudit dossier par rapport au plancher (11) du véhicule, et une position du dossier rabattue sur l'assise (14) de la banquette.

7. Dispositif selon l'une des revendications 2 à 4 ou 6, **caractérisé en ce que** les nervures précitées (31, 32, 33, 34 ; 51, 52, 53) sont rapportées sur les parois latérales internes (13) du véhicule ou obtenues lors du moulage de ces parois.

8. Dispositif selon la revendication 5, **caractérisé en ce que** les nervures précitées (41, 42 ; 61, 62) du dossier (4) de la banquette arrière et du hayon (6) forment des creux tournés vers l'intérieur du véhicule.

## Claims

1. Modular internal partitioning device of the rear portion of a vehicle forming a boot by means of a movable floor panel (2) able to assume variable positions in the rear portion of the vehicle and cooperating via its edges (26, 27) with retention means (31, 32, 33, 34) integral with the internal side walls (13) of the rear portion of the vehicle, **characterised in that** the retention means (31, 32, 33, 34) include several ribs borne by the internal lateral walls (13) for several variable positions.

2. Device according to claim 1, **characterised in that** the retention means include first ribs (31, 32) approximately parallel to the floor (11) of the vehicle and situated at at least two different heights with respect to said floor, these ribs (31, 32) defining at least one top horizontal position and one bottom horizontal position of the floor panel (2).

3. Device according to claim 1 or 2, **characterised in that** the retention means also include second ribs (34) approximately orthogonal to the floor (11) of the vehicle, these ribs (34) defining at least one vertical position of the floor panel (2).

4. Device according to one of claims 1 to 3, **characterised in that** the retention means further include third ribs (33) slanted with respect to the floor (11) of the vehicle towards the rear of the latter so as to define a raised position of the panel.

5. Device according to one of claims 2 to 4, **characterised in that** it includes other ribs (41, 42 ; 61, 62) provided both on the back rest (4) of the rear bench of the vehicle and on a tailgate (6) able to be mounted at the rear extremity (15) of the vehicle, said other ribs cooperating with the floor panel (2) in said upper and lower horizontal positions.

6. Device according to claim 5, **characterised in that** it further includes other ribs (51, 52, 53) on the internal lateral walls (13) of the vehicle and which can cooperate with the back rest (4) and which respectively define a slanted position of the back rest (4) towards the rear of the vehicle, a vertical position of said back rest with respect to the floor (11) of the vehicle, and a position of the back rest folded onto the seat (14) of the bench.

7. Device according to one of claims 2 to 4 or 6, **characterised in that** said ribs (31, 32, 33, 34 ; 51, 52, 53) are directly mounted on the internal lateral walls (13) of the vehicle or obtained by moulding of said walls.

8. Device according to claim 5, **characterised in that** said ribs (41, 42 ; 61, 62) of the back rest (4) of the rear bench and the tailgate (6) form hollows orientated towards the inside of the vehicle.

## Patentansprüche

1. Modularer Raumteiler des hinteren Teils eines einen Kasten bildenden Fahrzeugs mittels einer abnehmbaren Bodenplatte (2), die geeignet ist, variable Positionen im hinteren Teil des Fahrzeugs einzunehmen und durch ihre Ränder (26, 27) mit mit den inneren Seitenwänden (13) des hinteren Teils des Fahrzeugs fest verbundenen Rückhaltemitteln (31, 32, 33, 34) zusammenwirkt, **dadurch gekennzeichnet, dass** die Rückhaltemittel (31, 32, 33, 34) mehrere von den inneren Seitenwänden (13) getragene Rippen für verschiedene variable Positionen umfassen.

2. Raumteiler gemäß Anspruch 1, **dadurch gekennzeichnet, dass** die Rückhaltemittel zum Boden (11) des Fahrzeugs deutlich parallele und sich wenigstens in zwei verschiedenen Höhen im Verhältnis zum Boden befindende erste Rippen (31, 32) umfassen, wobei diese Rippen (31, 32) wenigsten eine horizontale hohe Position und eine horizontale niedrige Position der Bodenplatte (2) definieren.

3. Raumteiler gemäß Anspruch 1 oder 2, **dadurch gekennzeichnet, dass** die Rückhaltemittel ebenfalls zwei zum Boden (11) des Fahrzeugs deutlich orthogonale Rippen (34) umfassen, wobei diese Rippen (34) wenigstens eine vertikale Position der Bodenplatte (2) definieren.

4. Raumteiler gemäß Anspruch 1 bis 3, **dadurch gekennzeichnet, dass** die Rückhaltemittel darüber hinaus zum hinteren Teil des Fahrzeugs hin dritte im Verhältnis zum Boden (11) des Fahrzeugs geneigte dritte Rippen (33) umfassen, um eine erhöhte Position der Platte zu definieren.

5. Raumteiler gemäß Anspruch 2 bis 4, **dadurch gekennzeichnet, dass** er andere Rippen (41, 42; 61, 62) umfasst, die sowohl auf der Rückenlehne (4) der Rückbank des Fahrzeugs als auch auf einer Heckklappe (6) vorgesehen sind, die geeignet ist, am hinteren Ende (15) des Fahrzeugs montiert zu werden, wobei die anderen Rippen mit der Bodenplatte (2) in den vorgenannten zwei hohen und niedrigen horizontalen Positionen zusammenwirken.

6. Raumteiler gemäß Anspruch 5, **dadurch gekennzeichnet, dass** er darüber hinaus andere Rippen (51, 52, 53) auf den inneren Seitenwänden (13) des Fahrzeugs umfasst, die mit der Rückenlehne (4) zusammenwirken können und die jeweils eine geneigte Position der Rückenlehne (4) zum hinteren Teil des Fahrzeuges hin definieren, eine vertikale Position der besagten Rückenlehne im Verhältnis zum Boden (11) und eine heruntergeklappte Position der Rückenlehne auf die Sitzfläche (14) der Sitzbank.

7. Raumteiler gemäß Anspruch 2 bis 4 oder 6, **dadurch gekennzeichnet, dass** die vorgenannten Rippen (31, 32, 33, 34; 51, 52, 53) auf den inneren Seitenwänden (13) des Fahrzeugs aufgesetzt sind oder beim Formen dieser Wände erhalten werden.

8. Raumteiler gemäß Anspruch 5, **dadurch gekennzeichnet, dass** die vorgenannten Rippen (41, 42; 61, 62) der Rückenlehne (41) der Rückbank und der Heckklappe (6) zum Innern des Fahrzeugs gerichtete Hohlräume bilden.
